# FASCICULE DE BREVET EUROPEEN

(11) **EP 0 432 033 B1**
(45) Date de publication et mention de la délivrance du brevet: **25.05.1994**
(21) Numéro de dépôt: 90403442.8
(22) Date de dépôt: 04.12.1990
(51) Int. Cl.: G21C 17/00, G06F 3/023

(54) **Procédé de mise en oeuvre d'une ronde de surveillance d'installations nucléaires**
Verfahren zur Bildung einer Überwachungsstreife in Kernkraftanlagen
Method for setting up a surveillance patrol of nuclear power plants

(30) Priorité: 05.12.1989 FR 8916059
(43) Date de publication de la demande: 12.06.1991
(73) Titulaire: COGEMA COMPAGNIE GENERALE DES MATIERES NUCLEAIRES, F-78141 Velizy-Villacoublay (FR)
(72) Inventeur: Petitclerc, Jean-Louis, F-50110 Tourlaville (FR); Ricaud, Jean-Louis, F-75017 Paris (FR)
(74) Mandataire: Dubois-Chabert, Guy

(56) Documents cités:
- EP-A- 0 157 477
- EP-A- 0 209 459
- US-A- 4 601 011

## Description

La présente invention a pour objet un procédé de mise en oeuvre d'une ronde de surveillance.

Elle s'applique notamment à la surveillance systématique de sites nucléaires.

Le fonctionnement automatique de certaines installations nucléaires nécessite une surveillance régulière. Suivant un parcours déterminé, un surveillant effectue une ronde pendant laquelle il relève les données délivrées par des capteurs placés en différents points de l'installation; il contrôle et éventuellement modifie l'état fonctionnel d'équipements (par exemple, ouverture ou fermeture d'une vanne...). L'accès à certaines zones des installations peut être difficile, voire même dangereux et il est bon de s'assurer aussi de la sécurité du surveillant.

A la fin de la ronde, les résultats des mesures effectuées sont généralement stockés et utilisés à des fins de maintenance ou de traitement statistique.

On connaît, par le brevet français n° 2 585 145, un procédé de surveillance d'une installation industrielle. L'opérateur chargé de la ronde s'assure de l'identification des capteurs ou des équipements à contrôler grâce à la lecture d'un numéro d'identification codé rattaché à chaque capteur ou équipement et à la comparaison automatique de ce numéro d'identification avec une référence préalablement enregistrée dans un système témoin, le système témoin délivrant à la suite de la comparaison un signal de validation. Les mesures effectuées pendant la ronde sont enregistrées dans le système témoin.

Ce type de procédé tend à déresponsabiliser l'opérateur. Il permet de s'assurer du passage effectif de l'opérateur aux points de mesure.

L'analyse des mesures effectuées pendant la ronde n'a lieu au plus tôt, qu'au retour de l'opérateur au poste central de contrôle. Aucune décision concernant le fonctionnement de l'installation industrielle ne peut être prise pendant la ronde. Ce décalage temporel entre les mesures et leur analyse est préjudiciable au bon fonctionnement de l'installation: tout retard dans la consultation des résultats empêche des actions de maintenance rapides et efficaces.

La présente invention a pour but de fournir un procédé de mise en oeuvre de ronde très souple autorisant des actions de maintenace préventives. Un "dialogue" entre une unité centrale de surveillance et le surveillant permet de suivre le parcours de ce dernier de point de mesure en point de mesure et de s'assurer ainsi du bon déroulement de la ronde. Cela permet, en outre, de signaler en temps réel toute anomalie constatée lors d'une mesure et de prendre les dispositions nécessaires très rapidement, sans attendre le retour du surveillant. Le surveillant est investi de plus de responsabilités: il peut décider d'effectuer des mesures complémentaires ou des changements d'état fonctionnel d'équipement qui ne sont pas prévus à l'origine, lors de la définition du parcours de la ronde.

Dans le procédé selon l'invention, le surveillant joue un rôle actif. Il est assisté dans ses décisions par un outil micro-informatique portable connecté par une liaison radio à l'unité centrale: à la suite de la détection d'une anomalie, il peut décider de suspendre sa ronde pour effectuer des opérations qui lui semblent nécessaire, tout en tenant informée l'unité centrale de surveillance.

De manière plus précise, la présente invention concerne un procédé de mise en oeuvre d'une ronde de surveillance d'un site nucléaire sur lequel sont répartis des points de relevé regroupant au moins un capteur et/en au moins un équipement présentant un certain état fonctionnel, la ronde étant effectuée par un opérateur. Ce procédé consiste à:
(A) préalablement,
   (a) enregistrer, dans un ordinateur central connecté à un émetteur/récepteur de radiofréquence,
      (i) un enchaînement de points de relevé, de capteurs à contrôler et des équipements à contrôler et/ou dont l'état fonctionnel est à modifier, cet enchaînement constituant la ronde,
      (ii) des informations comprenant au moins des valeurs de référence, des seuils de tolérance, et des commentaires d'assistance à la décision de l'opérateur concernant les points de relevé, les capteurs à contrôler et les équipements à contrôler et/ou dont l'état fonctionnel est à modifier,
   (b) recopier l'enregistrement effectué en (a) dans un microordinateur portable connecté à un émetteur/récepteur de radiofréquence,
(B) lors de la ronde,
   (a) à chaque passage à un point de relevé,
      (i) effectuer une validation attestant le passage au point de relevé; à chaque validation un signal de localisation du point de relevé est transmis par l'émetteur connecté au microordinateur portable au récepteur connecté à l'ordinateur central et enregistré dans l'ordinateur central,
      (ii) contrôler les points de mesure devant l'être; les points de mesure délivrant des informations,
         enregister ces informations dans le microordinateur portable, et les comparer aux informations préenregistrées concernant ces points de mesure de manière à détecter toute anomalie,
      (iii) contrôler et/ou modifier l'état fonctionnel des équipements devant l'être, enregistrer des informations concernant ces équipements et les comparer aux informations préenregistrées concernant ces équipements de manière à détecter toute anomalie,
         toute détection d'anomalie en (ii) et en (iii) provoquant une émission de la part de l'émetteur du microordinateur portable vers le récepteur de l'ordinateur central,
(D) à la fin de la ronde, les informations enregistrées dans le microordinateur portable sont recopiées dans l'ordinateur central de façon à être traitées.

La validation à chaque point de relevé atteste le passage du surveillant: elle permet de le suivre, par l'intermédiaire de l'ordinateur central, tout au long de la ronde.

Grâce au "dialogue" entre les ordinateurs, qui permet au surveillant de garder le contact avec la salle de contrôle, toute anomalie est immédiatement communiquée à l'ordinateur central et les décisions de secours ou de maintenance peuvent être prises en temps utile.

Le transfert des informations relevées pendant la ronde dans l'ordinateur central permet un historique de ronde en ronde des différentes mesures effectuées.

Les caractéristiques et avantages de l'invention apparaitront mieux après la description qui suit, donnée à titre explicatif et nullement limitatif.

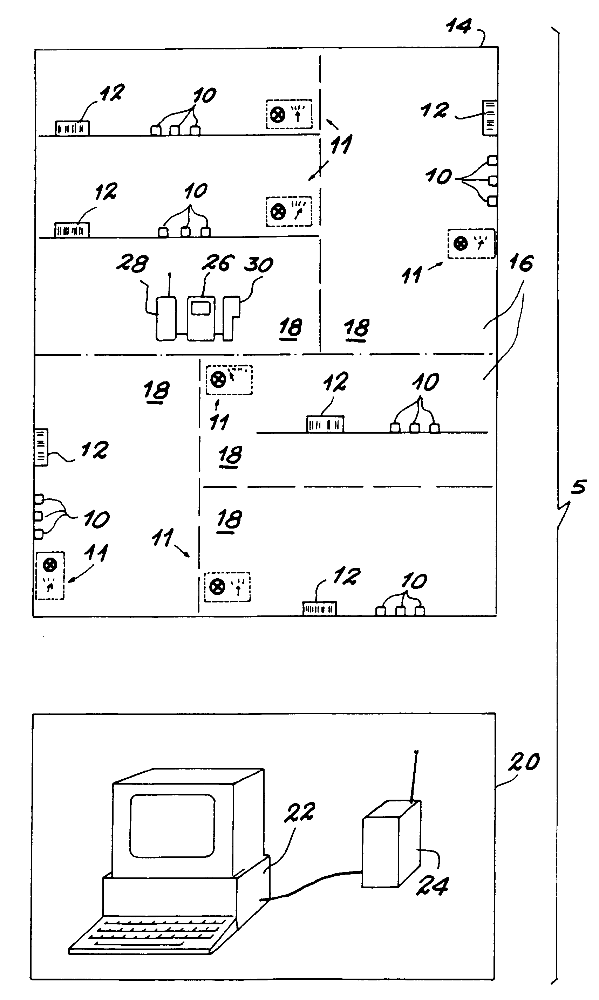

Cette description se réfère à une figure unique annexée qui représente schématiquement un site industriel sur lequel sont effectuées des rondes de surveillance conformément au procédé de l'invention.

Ce site industriel 5 comporte des installations automatiques (non représentées) dont le fonctionnement est contrôlé par des capteurs 10 disséminés sur le site 5, mais regroupés autour de points de relevé 12. Des équipements 11 présentant un certain état fonctionnel sont aussi rattachés à ces points de relevé; ces équipements peuvent être des vannes, des interrupteurs, ou autres.

Chaque point de relevé 12 est localisé sur le site 5 et marqué par une étiquette supportant un code à barres d'identification du point. Pour localiser un point de relevé 12, on peut par exemple diviser le site 5 en niveaux: le niveau 1 correspond à un bâtiment 14; le niveau 2 correspond à une partie du bâtiment désignée sous le terme de cellule 16; le niveau 3 correspond à une partie de la cellule désignée sous le terme d'unité 18. Une unité 18 peut comprendre plusieurs points de relevé 12.

Sur la figure, le bâtiment 14 est divisé en deux cellules 16 séparées par un trait mixte. Les cellules 16 sont divisées par des traits tiretés en unités 18. Le site 5 comprend aussi au moins une salle de contrôle 20 dans laquelle est installé au moins un ordinateur central 22 connecté à un émetteur/récepteur de radiofréquence 24. Cet ordinateur 22 peut être du type microordinateur.

Diverses données sont contenues dans un fichier général qui est tenu à jour après chaque ronde. Ce fichier enregistré dans l'ordinateur central 22 contient tous les points de relevé 12 auxquels sont attribués des références d'identification permettant leur localisation. Le fichier contient aussi la liste des capteurs 10 et des équipements 11 regroupés autour des points de relevé 12. Ces capteurs 10 et équipements 11 sont repérés par des références d'identification. Diverses informations complètent cette liste dans le fichier, par exemple: le type de capteur (thermique, électrique, sensible aux irradiations, sensible aux fumées) ou d'équipement (vanne, interrupteur, ascenseur), la localisation géographique, les valeurs ou les caractéristiques normalement attendues, des seuils de tolérance, les contrôles à effectuer sur les données collectées lors des rondes, les valeurs relevées au cours des différentes rondes déjà effectuées, la date et l'heure de ces relevées, les unités de mesure employées et toute autre information permettant d'effectuer une surveillance efficace comme par exemple des commentaires d'assistance à la décision concernant chacun des capteurs et équipements.

Ce fichier permet, entre autre, l'affichage sur un moniteur vidéo d'un plan du site industriel muni de tous les points de relevé, les capteurs et équipements à surveiller.

Avant son départ pour la ronde, l'opérateur choisit dans le fichier central un enchaînement de points de relevé 12, de capteurs 10 à contrôler et d'équipements à contrôler et/ou dont l'état fonctionnel est à modifier. Cet enchaînement est enregistré dans l'odinateur central 22 : il définit par le parcours de la ronde sur le site 5. Sont aussi enregistrées les informations (ou une partie de ces informations, mais au moins les valeurs de référence, des valeurs historiques correspondant aux cinq derniers relevés par exemple, des seuils de tolérance, et des commentaires d'assistance à la décision) concernant les points de relevé 12, les capteurs 10 et équipements 11 à surveiller.

Des parcours types munis des informations les concernant sont aussi disponibles. Ils évitent à l'opérateur de redéfinir à chaque départ son parcours complet. Ces parcours types peuvent être modifiés à volonté.

Lorsque l'enchaînement est établi, on définit une durée théorique nécessaire au trajet entre chaque point de relevé 12. Cette durée est enregistrée dans une mémoire de l'ordinateur central 22 pour chaque trajet entre deux points de relevé 12.

Chaque ronde démarre de la salle de contrôle 20, où le surveillant recopie l'enchaînement établi ainsi que les informations s'y rattachant dans une mémoire d'un microordinateur portable 26 muni d'un écran associé à un émetteur/récepteur de radiofréquence 28. Ce microordinateur 26 est aussi muni d'un pistolet pour la lecture d'un code à barres 30.

Grâce à ces données, le microordinateur 26, emporté lors de la ronde, guide le surveillant en lui indiquant vers quel point de relevé 12 se diriger et les capteurs 10 ou équipements à contrôler.

A chaque passage à un point de relevé 12, le surveillant lit le code à barres portant la référence d'identification du point avec le pistolet 30. Cette lecture du code à barres constitue une validation du passage de l'opérateur au point de relevé 12. Le microordinateur 26 enregistre la lecture et lui attribue un horaire de passage grâce à une horloge interne. De plus, le microordinateur 26 affiche sur l'écran un message confirmant à l'opérateur que le point de relevé est bien celui prévu dans l'enchaînement constituant la ronde. Dans le cas contraire, l'affichage porté sur l'écran du microordinateur portable indique le point de relevé normalement prévu. A ce stade l'opérateur a le choix entre confirmer la modification de l'ordre prévu en validant cette information sur le clavier ou de se diriger vers le point de relevé affiché et à refaire sur place une lecture d'identification par lecture du code à barre.

A chaque lecture d'une référence d'identification d'un point de relevé, un signal de localisation est transmis par l'émetteur 28 connecté au microordinateur portable 26 vers le récepteur 24 connecté à l'ordinateur central 22. La réception du signal a pour effet de déclencher une horloge interne à l'ordinateur 22. Si la validation suivante n'est pas effectuée alors que la durée théorique entre deux validations, définie précédemment, est écoulée, une alarme est déclenchée par l'ordinateur central 22. Cette alarme peut être dans un premier temps, un signal transmis par l'émetteur 24 associé à l'ordinateur central 22 vers le récepteur 28 associé au microordinateur portable 26. Ce signal déclenche une émission sonore et/ou visuelle ou bien l'affichage d'un message sur l'écran du micoordinateur 26. Le surveillant doit alors répondre par un message qu'il entre dans le microordinateur 26 et qui est transmis par émission radiofréquence à l'ordinateur 22. En cas de non réponse, l'ordinateur 22 peut alerter une équipe de secours qui intervient d'autant plus rapidement que la localisation du surveillant est connue.

A chaque point de relevé 12, le surveillant relève les informations délivrées par les capteurs 10 et les enregistre dans une mémoire du microordinateur portable 26. Il effectue aussi les contrôles et/ou les changements d'état fonctionnel des équipements 11 et enregistre des informations concernant ces équipements.

Pour chaque capteur 10 ou équipement 11, le microordinateur 26 procède à une comparaison entre ces informations et les valeurs préenregistrées correspondant à un fonctionnement normal des installations. Cette comparaison ainsi que la définition de seuils de tolérance permet de détecter une anomalie de fonctionnement.

Après chaque saisie d'informations concernant les capteurs 10 ou les équipements 11, le surveillant doit effectuer une validation. Lorsque la valeur validée est hors-norme, le microordinateur 26 émet, par l'intermédiaire de l'émetteur 28, un message vers l'ordinateur central 22. Ce dernier, suivant le capteur 10 déficient et le type d'anomalie, alerte une équipe de maintenance qui peut opérer rapidement et efficacement. Eventuellement, l'ordinateur central 22 peut automatiquement couper certains circuits électriques ou autres.

Lorsqu'un fonctionnement anormal est constaté, le surveillant peut afficher les informations historiques mémorisées dans le microordinateur portable 26 et concernant les mesures effectuées lors des précédentes rondes. Le microordinateur portable 26 affiche aussi les commentaires d'aide à la décision et le surveillant peut, selon les cas, changer l'odre de passage aux points de relevé 12, vérifier des capteurs 10 ou équipements 11 non prévus lors de la définition de la ronde, voire interrompre sa ronde, tout en tenant informé l'ordinateur central 22 par l'intermédiaire de la liaison radiofréquence.

Pour chaque capteur 10 ou équipement 11 contrôlé, le surveillant a la possibilité d'enregistrer des commentaires sur le fonctionnement des installations. Ces commentaires favorisent une maintenance préventive efficace puisqu'ils permettent de prévenir les incidents. Par exemple, une équipe de maintenance alertée par ces commentaires peut remplacer telle ou telle pièce avant que celle-ci ne se détériore, dès qu'elle présente des signes de défaillance.

A la fin de la ronde, les informations lues sur les capteurs 10 et contenues dans une mémoire du microordinateur portable 26 sont enregistrées dans une mémoire de l'ordinateur central 22 de manière à y être traitées; le fichier central est aussi mis à jour. Le traitement peut être une statistique sur un grand nombre de rondes des évolutions des informations délivrées par les capteurs ou une analyse de dérive des indications relevées sur les capteurs. On obtient aussi, à volonté, une édition sur papier de toutes les informations.

Le procédé selon l'invention permet de suivre plusieurs surveillants à partir de la même salle de contrôle. La liaison permanente entre l'ordinateur central et le microordinateur portable permet des prises de décision rapides et efficaces.

Grâce à cette liaison et aux informations contenues dans le microordinateur portable, le surveillant peut analyser des situations anormales et agir en conséquence; il est responsable de ses actes, tout en restant sous le contrôle de l'ordinateur central.

## Revendications

1. Procédé de mise en oeuvre d'une ronde de surveillance d'un site nucléaire sur lequel sont répartis des points de relevé regroupant au moins un capteur et/ou au moins un équipement présentant un certain état fonctionnel, la ronde étant effectuée par un opérateur, caractérisé en ce qu'il consiste à:
(A) préalablement,
(a) enregistrer, dans un ordinateur central connecté à un émetteur/récepteur de radiofréquence,
(i) un enchaînement de points de relevé, de capteur à contrôler et des équipements à contrôler et/ou dont l'état fonctionnel est à modifier, cet enchaînement constituant la ronde,
(ii) des informations comprenant au moins des valeurs de référence des seuils de tolérance, et des commentaires d'assistance à la décision de l'opérateur concernant les points de relevé, les capteurs à contrôler et les équipements à contrôler et/ou dont l'état fonctionnel est à modier,
(b) recopier l'enregistrement effectué en (a) dans un microordinateur protable connecté à un émetteur/récepteur de radiofréquence,
(B) lors de la ronde,
(a) à chaque passage à un point de relevé,
(i) effectuer une validation attestant le passage au point de relevé; à chaque validation un signal de localisation du point de relevé est transmis par l'émetteur connecté au microordinateur portable au récepteur connecté à l'ordinateur central et enregistré dans l'ordinateur central,
(ii) contrôler les points de mesure devant l'être; les points de mesure délivrant des informations,
enregister ces informations dans le microordinateur portable, et les comparer aux informations préenregistrées concernant ces points de mesure de manière à détecter toute anomalie,
(iii) contrôler et/ou modifier l'état fonctionnel des équipements devant l'être, enregistrer des informations concernant ces équipements et les comparer aux informations préenregistrées concernant ces équipements de manière à détecter toute anomalie,
toute détection d'anomalie en (ii) et en (iii) provoquant une émission de la part de l'émetteur du microordinateur portable vers le récepteur de l'ordinateur central,
(D) à la fin de la ronde, les informations enregistrées dans le microordinateur portable sont recopiées dans l'ordinateur central de façon à être traitées.

2. Procédé selon la revendication 1, caractérisé en ce que, suite aux étapes (B)(a)(ii) ou (B)(a)(iii), l'enchaînement de points de relevé (12), de capteurs (10) et d'équipements (11) est éventuellement modifié, une émission radiofréquence du microordinateur portable (26) vers le récepteur de l'ordinateur central (22) informant l'ordinateur central (22) des modifications.

3. Procédé selon la revendication 1, caractérisé en ce que, suite aux étapes (B)(a)(ii) ou (B)(a)(iii), la ronde est interrompue, une émission radiofréquence du microordinateur portable (26) vers le récepteur de l'ordinateur central (22) informant l'ordinateur central (22) de l'interruption.

4. Procédé selon la revendication 3, caractérisé en ce que, après une interruption, la ronde est éventuellement reprise à partir de n'importe quel point de relevé (12).

5. Procédé selon la revendication 1, caractérisé en ce que la validation d'un point de relevé (12) consiste à lire un code à barres associé au point de relevé (12).

6. Procédé selon la revendication 1, caractérisé en ce qu'un fichier des points de relevé (12) et de leur localisation sur le site (5) contenant en outre une liste des capteurs (10) et des équipements (11) regroupés à chaque point de relevé (12) est enregistré dans l'ordinateur central (22).

7. Procédé selon la revendication 6, caractérisé en ce que l'enchaînement constituant la ronde est déterminé à partir de ce fichier.

8. Procédé selon la revendication 1, caractérisé en ce que l'enchaînement constituant la ronde est choisi parmi une liste d'enchaînements préalablement établis enregistrés dans l'ordinateur central (22).

9. Procédé selon la revendication 1, caractérisé en ce qu'une durée théorique nécessaire au trajet entre chaque point de relevé (12) est enregistrée dans l'ordinateur central (22);
au cours de la ronde, après chaque validation une horloge est déclenchée par l'ordinateur central (22); si la validation suivante n'est pas effectuée alors que la durée théorique est écoulée, une alarme est déclenchée par l'ordinateur central (22).

## Patentansprüche

1. Verfahren zur Bildung einer Überwachungsstreifenrunde in Kernkraftanlagen, in denen Kontrollpunkte verteilt sind, wo wenigstens ein Sensor und/oder Ausrüstungsteile zusammengefaßt sind, die einen gewissen Funktionszustand aufweisen, wobei die Streifenrunde durchgeführt wird von einem Operator,
**dadurch gekennzeichnet**,
daß es umfaßt:
(A) vorher,
(a) Aufzeichnen in einem Zentralcomputer, verbunden mit einem Funkfrequenz-Sender/Empfänger,
(i) einer Abfolge von Kontrollpunkten von zu überprüfenden Sensoren und zu überprüfenden Ausrüstungsteilen und/oder deren Funktionszustand zu verändern ist, wobei diese Abfolge die Streifenrunde bildet,
(ii) von Informationen, die wenigstens Bezugswerte der Toleranzschwellen enthalten, und Hilfskommentare zu der Entscheidung des Operators, die Kontrollpunkte, die zu überprüfenden Sensoren und die zu überprüfenden Ausrüstungsteile betreffend und/oder deren Funktionszustand zu verändern ist,
(b) Kopieren der in (a) ausgeführten Aufzeichnung in einen tragbaren Mikrocomputer, angeschlossen an einen Funkfrequenz-Sender/Empfänger,
(B) während der Streifenrunde,
(a) beim Vorbeikommen an jedem Kontrollpunkt,
(i) Durchführen einer Validierung, die das Vorbeikommen am Kontrollpunkt bestätigt; bei jeder Bestätigung wird ein Lokalisierungssignal des Kontrollpunkts durch den an den tragbaren Mikrocomputer angeschlossenen Sender übertragen zu dem an den Zentralcomputer angeschlossenen Empfänger und in dem Zentralcomputer aufgezeichnet,
(ii) Kontrollieren der in Frage kommenden Meßpunkte; indem die Meßpunkte Informationen liefern,
Aufzeichnen dieser Informationen in dem tragbaren Mikrocomputer und sie vergleichen mit den vorher aufgezeichneten, diese Meßpunkte betreffenden Informationen, um jede Anomalie festzustellen,
(iii) Kontrollieren und/oder verändern des Funktionszustands der in Frage kommenden Ausrüstungsteile, Aufzeichnen der diese Ausrüstungsteile betreffenden Informationen und sie vergleichen mit den vorhergehend aufgezeichneten, diese Ausrüstungsteile betreffenden Informationen, um jede Anomalie festzustellen,
wobei jede Anomalie-Festellung in (ii) und in (iii) eine Übertragung von seiten des Senders des tragbaren Mikrocomputers zum Empfänger des Zentralcomputers auslöst,
(D) am Ende der Streifenrunde werden die in dem tragbaren Mikrocomputer aufgezeichneten Informationen in den Zentralcomputer kopiert, um verarbeitet zu werden.

2. Verfahren nach Anspruch 1, dadurch gekennzeichnet, daß in der Folge der Schritte (B) (a) (ii) oder (B) (a) (iii) die Abfolge aus Kontrollpunkten (12), Sensoren (10) und Ausrüstungsteilen (11) eventuell geändert wird, wobei eine Funkfrequenzübertragung vom tragbaren Mikrocomputer (26) zum Zentralcomputer (22) den Zentralcomputer (22) über die Änderungen informiert.

3. Verfahren nach Anspruch 1, dadurch gekennzeichnet, daß in der Folge der Schritte (B) (a) (ii) oder (B) (a) (iii) die Streifenrunde unterbrochen wird, wobei eine Funkfrequenzübertragung vom tragbaren Mikrocomputer (26) zum Zentralcomputer (22) den Zentralcomputer (22) über die Änderungen informiert.

4. Verfahren nach Anspruch 3, dadurch gekennzeichnet, daß nach einer Unterbrechung die Streifenrunde eventuell wieder aufgenommen wird an irgendeinem Kontrollpunkt (12).

5. Verfahren nach Anspruch 1, dadurch gekennzeichnet, daß die Validierung eines Kontrollpunkts (12) darin besteht, einen dem Kontrollpunkt (12) zugeordneten Strichcode zu lesen.

6. Verfahren nach Anspruch 1, dadurch gekennzeichnet, daß eine Datei der Kontrollpunkte (12) und ihrer Position auf der Anlage (5), die außerdem eine Liste der an jedem Kontrollpunkt zusammengefaßten Sensoren (10) und Ausrüstungsteile (11) enthält, aufgezeichnet ist im Zentralcomputer (22).

7. Verfahren nach Anspruch 6, dadurch gekennzeichnet, daß die die Streifenrunde bildende Abfolge festgelegt wird auf Grund dieser Datei.

8. Verfahren nach Anspruch 1, dadurch gekennzeichnet, daß die die Streifenrunde bildende Abfolge gewählt wird aus einer vorher erstellten Abfolgeliste, die im Zentralcomputer (22) gespeichert ist.

9. Verfahren nach Anspruch 1, dadurch gekennzeichnet, daß eine theoretischer Dauer, erforderlich für die Wegstrecke zwischen den einzelnen Kontrollpunkt (12), aufgezeichnet ist im Zentralcomputer (22); im Laufe der Streifenrunde, nach jeder Validierung, wird durch den Zentralcomputer (22) eine Uhr eingeschaltet; wenn die folgende Validierung nicht erfolgt, obwohl die theoretische Dauer abgelaufen ist, wird durch den Zentralcomputer (22) ein Alarm ausgelöst.

## Claims

1. Process for performing a monitoring or inspection round of a nuclear site over which are distributed collection or reading points grouping at least one sensor and at least one equipment having a certain operating state, the round being performed by a watchman, characterized in that it comprises:
(A) beforehand
(a) recording in a central computer connected to a radiofrequency transceiver,
(i) a sequence or combination of collection points, sensors to be checked and equipnents to be checked and/or whose operating state is to be modified, said sequence constituting the round,
(ii) information including at least reference values, tolerance thresholds and assistance comments on the watchman's decision concerning the collection points, the sensors to be checked and the equipnents to be checked and/or whose operating state is to be modified,
(b) copying again the recording performed in (a) in a portable microcomputer connected to a radiofrequency transceiver,
(B) during the round,
(a) one collection point for each passage,
(i) performing a validation affirming passage to the collection point and for each validation a pinpointing signal of said collection point is transmitted by the transmitter connected to the portable microcomputer to the receiver connected to the central computer and recorded in the latter,
(ii) checking the measuring points supplying information, recording said information in the portable microcomputer and comparing same with prerecorded information concerning the measuring points in such a way as to detect any abnormal state,
(iii) checking and/or modifying the operating state of the equipment, recording information concerning said equipment and comparing the sane with prerecorded information concerning said equipment so as to detect any abnormal state, any abnormal state detection in (ii) and (iii) leading to the transmission by the transmitter of the portable microcomputer to the receiver of the central computer,
(D) at the end of the round, the information recorded in the portable microcomputer is copied again into the central computer for processing.

2. Process according to claim 1, characterized in that, following stages (B)(a)(ii) or (B)(a)(iii), the sequence of collection points (12), sensors (10) and equipments (11) is optionally modified, a radiofrequency transmission from the portable microcomputer (26) to the receiver of the central computer (22) informing the central computer (22) of changes.

3. Process according to claim 1, characterized in that, following stages (B)(a)(ii) or (B)(a)(iii), the round is interrupted, a radio-frequency transmission from the portable microcomputer (26) to the receiver of the central computer (22) informing the latter of the interruption.

4. Process according to claim 3, characterized in that, following an interruption, the round is optionally resumed from any random collection point (12).

5. Process according to claim 1, characterized in that the validation of a collection point (12) consists of reading a bar code associated with the collection point (12).

6. Process according to claim 1, characterized in that a file of collection points (12) and their location on the site (5) also containing a list of sensors (10) and equipments (11) grouped at each collection point (12) is recorded in the central computer (22).

7. Process according to claim 6, characterized in that the sequence constituting the round is determined on the basis of said file.

8. Process according to claim 1, characterized in that the sequence constituting the round is chosen from among a list of previously established sequences recorded in the central computer (22).

9. Process according to claim 1, characterized in that a theoretical time necessary for the path between each collection point (12) is recorded in the central computer (22) and, during the round, following each validation a clock is triggered by the central computer (22) and if the following validation has not taken place when the theoretical time has elapsed, an alarm is triggered by the central computer (22).
